# EUROPÄISCHE PATENTSCHRIFT

(11) **EP 4 404 867 B1**
(45) Veröffentlichungstag und Bekanntmachung des Hinweises auf die Patenterteilung: **06.08.2025**
(21) Anmeldenummer: 22777230.8
(22) Anmeldetag: 19.09.2022
(51) Int. Cl.: A61C 8/00

(54) **ZAHNIMPLANTAT**
DENTAL IMPLANT
IMPLANT DENTAIRE

(30) Priorität: 22.09.2021 DE 102021124543
(43) Veröffentlichungstag der Anmeldung: 31.07.2024
(73) Patentinhaber: BEGO Implant Systems GmbH & Co. KG, 28359 Bremen (DE)
(72) Erfinder: MEYER, Stephan, 28359 Bremen (DE)
(74) Vertreter: Eisenführ Speiser
(86) Internationale Anmeldenummer: PCT/EP2022/075921
(87) Internationale Veröffentlichungsnummer: WO 2023/046622

(56) Entgegenhaltungen:
- WO-A1-99/39653
- WO-A1-99/39653
- US-A- 5 087 201
- US-A- 5 087 201
- US-A1- 2009 258 328
- US-A1- 2009 258 328

## Beschreibung

Die Erfindung betrifft ein Zahnimplantat, das in einen Kieferknochen eingebracht werden kann, um dort bevorzugt als Träger für einen Zahnersatz wie eine Krone zu dienen. Das Zahnimplantat übernimmt dann insbesondere die Funktion einer künstlichen Zahnwurzel.

Ein Zahnimplantat umfasst einen Implantatkörper, der in einen Kieferknochen eingesetzt wird, um darin eine feste Verankerung bereitzustellen. Ein Implantatkörper kann ein Schraubgewinde aufweisen, um in einen Kieferknochen eingeschraubt zu werden oder kann eine glatte Oberfläche aufweisen, um in einen Kieferknochen eingesteckt zu werden. Im eingebrachten Zustand verbindet sich der Implantatkörper eines Zahnimplantats typischerweise innerhalb weniger Monate mit dem umgebenen Knochen und ist dann in dem Kieferknochen verankert, um einen stabilen Träger für einen Zahnersatz zu bilden.

Ein Zahnimplantat kann weiterhin ein Abutment umfassen, das beispielsweise mittels einer Schraube oder durch Zementierung mit dem in dem Kieferknochen verankerten Implantatkörper verbunden ist. Auf dem Abutment kann eine Krone befestigt werden, die die ursprüngliche Geometrie des ersetzten Zahnes nachempfindet und eine gute Funktionalität und Ästhetik im Zusammenspiel mit den anderen, benachbarten und gegenüberliegenden Zähnen des Patienten herstellen soll.

Damit ein Zahnimplantat an der dafür vorgesehenen Stelle in einen Kieferknochen eingesetzt werden kann, wird in der Regel mit verschiedenen Aufbereitungsinstrumenten ein Bohrloch vorbereitet. Das Erzeugen des Bohrlochs und gegebenenfalls eines Innengewindes für das Zahnimplantat an der vorbereiteten Stelle erfolgt typischerweise indem zunächst mit einem Pilotbohrer eine Vorkörnung des Knoches und eine primäre Bohrung zur Richtungsorientierung durchgeführt wird. Anschließend wird ein Tiefenbohrer mit einem Durchmesser, der kleiner als der für das Zahnimplantat erforderliche Durchmesser ist, dazu verwendet, das Bohrloch bis auf die für das Zahnimplantat erforderliche Tiefe zu erweitern. Mit einem finalen Tiefenbohrer erfolgt eine laterale Erweiterung des Durchmessers des Bohrlochs. Anschließend kann ein Kopfsenker dazu verwendet werden, den kortikalen Knochen zu erweitern. Abschließend kann mit einem Gewindescheider ein Innengewinde in den Knochen geschnitten werden.

Ein Zahnimplantat kann also typischerweise erst in einen Kieferknochen eingesetzt werden, wenn vorher eine Reihe von Schritte durchgeführt wurden, die dazu dienen zunächst das Bohrloch für das Zahnimplantat zu erzeugen.

Um die Anzahl der bis zum tatsächlichen Einsetzen des Zahnimplantats erforderlichen Schritte zu reduzieren, wurden selbstschneidende Zahnimplantate vorgeschlagen, die beim Einbringen des Zahnimplantats in ein Bohrloch selbst ein Gewinde schneiden. Solche Zahnimplantate sind beispielsweise in EP 1161197 B1, EP 0786967 A1 und EP 1052948 A1 beschrieben. Zum Einsetzen dieser Zahnimplantate muss jedoch immer noch zunächst ein Bohrloch erzeugt werden.

Um die Anzahl der für die Vorbereitung des Bohrlochs notwendigen Schritte weiter zu reduzieren, wurden weiterhin Zahnimplantate vorgeschlagen, die sowohl selbstscheidend als auch selbstbohrend sind. Solche Zahnimplantate sind beispielsweise in EP 1480575 B1, und WO 99/39653 beschrieben.

Das in EP 1480575 B1 beschriebene Zahnimplantat weist einen sich an einen Spitzenabschnitt anschließenden Zwischengewindeabschnitt gefolgt von einem Führungsgewindeabschnitt und einem distalen Gewindeabschnitt auf, deren Gewinde eine Schneidkante umfassen. Das Zahnimplantat umfasst weiterhin Rillen, die von dem Spitzenabschnitt entlang der Längsrichtung des Zahnimplantats verlaufen und der Aufnahme von Knochenspäne dienen. Die Rillen selbst weisen jedoch keine Schneidkante auf.

Auch bei dem in WO 99/39653 beschriebenen Implantat sind die Gewindegänge eines Außengewindeabschnitts selbstschneidend. Die Kerben des Implantats dienen der Aufnahme von Knochenspäne, eignen sich allerdings nicht zum direkten Abtransport der Knochenspäne.

Wenn ein wie in EP 1480575 B1 und in WO 99/39653 beschriebenes Zahnimplantat in einen Kieferknochen eingesetzt wird, kann es vorkommen, dass beim Schneiden entstandene Knochenspäne zumindest weitestgehend in dem Kieferknochen verbleibt. Da somit lediglich ein Zahnimplantat in den Kieferknochen eingesetzt wird, nicht aber entsprechendes Knochenmaterial entfernt wurde, ist davon auszugehen, dass der Kieferknochen mit eingesetztem Zahnimplantat einer vergleichsweise hohen mechanischen Belastung, d.h. insbesondere einer Kompression des umliegenden Knochens, ausgesetzt ist.

In US 5 087 201 A ist ein selbstschneidender Stift zum Einschrauben in den Oberkieferknochen für die Implantation einer Zahnprothese beschrieben. Der selbstschneidende Stift hat einen mit einem Gewinde versehenen Schaftabschnitt, einen Antriebskopf an einem Ende des Schaftabschnitts und einem Bohrer am anderen Ende des Schaftabschnitts.

Der Erfindung liegt die Aufgabe zugrunde, ein verbessertes oder zumindest alternatives Zahnimplantat bereitzustellen, das sowohl selbstscheidend als auch selbstbohrend ist. Bevorzugt sollte das selbstscheidende und selbstbohrende Zahnimplantat im eingesetzten Zustand eine möglichst geringe mechanische Belastung auf einen Kieferknochen ausüben.

Erfindungsgemäß wird diese Aufgabe durch ein Zahnimplantat mit den Merkmalen des Anspruchs 1 gelöst. Vorteilhafte Weiterbildungen des erfindungsgemäßen Zahnimplantats sind den abhängigen Ansprüchen zu entnehmen.

Erfindungsgemäß wird ein Zahnimplantat mit einem Implantatkörper vorgeschlagen, der sich in einer Längsrichtung des Implantatkörpers von seinem apikalen Ende zu seinem koronalen Ende erstreckt. Der Implantatkörper weist einen Bohrerabschnitt auf, in dem der Implantatkörper zum Bohren eines Bohrloches in einen Kieferknochen ausgebildet ist. Der Implantatkörper weist weiterhin einen sich an den Bohrerabschnitt in koronaler Richtung anschließenden Schaft auf, der einen ersten Gewindeabschnitt umfasst, in dem der Implantatkörper ein Außengewinde aufweist.

Der Implantatkörper umfasst in dem ersten Gewindeabschnitt wenigstens eine das Außengewinde unterbrechende Gewindeschneidnut, die wendelförmig um zumindest einen axialen Abschnitt des Schafts verläuft und weist wenigstens in dem ersten Gewindeabschnitt eine am Übergang zwischen der Gewindeschneidnut und dem Außengewinde angeordnete selbstschneidende Gewindeschneidkante auf.

Der Bohrerabschnitt dient insbesondere dazu, ein Bohrloch in einem Kieferknochen zu erzeugen, in das das Zahnimplantat wenigstens teilweise eingebracht werden kann. Das Zahnimplantat selbst ist also dazu ausgebildet, in einem Kieferknochen ein Bohrloch zu erzeugen.

Das apikale Ende des Implantatkörpers bezeichnet dabei dasjenige Ende des Implantatkörpers, das zuerst in einen Kieferknochen eindringt, und sich im eingesetzten Zustand des Zahnimplantats am tiefsten in dem Bohrloch befindet.

Das koronale Ende des Implantatkörpers bezeichnet das dem apikalen Ende des Implantatkörpers gegenüberliegende Ende. Mit seinem koronalen Ende befindet sich der Implantatkörper, insbesondere wenn das Zahnimplantat eingesetzt ist, typischerweise außerhalb des Bohrlochs. Beispielsweise kann der Implantatkörper an seinem koronalen Ende mit einem Abutment des Zahnimplantats verbunden sein, das wiederum mit einem Zahnersatz wie einer Krone verbunden werden kann.

Der Bohrerabschnitt weist folglich zumindest eine und typischerweise zwei an der apikalen Stirnseite des Implantatkörpers angeordnete Bohrschneidkanten auf, die am Übergang zwischen der apikalen Stirnseite des Implantatkörpers und den Spannuten des Bohrerabschnitts ausgebildet sind. Diese Bohrschneidkanten sind für eine spanende bearbeitung mit axialer Vorschubrichtung entlan der Längsachse des Implantatkörpers ausgebildet. Die Gewindeschneidkante ist demgegenüber am Übergang zwischen der Gewindeumfangsfläche und der Gewindeschneidnut ausgebildet und dient dazu, eine radiale Aufweitung des gebohrten Loches mit der Kontur des Gewindes spanend herzustellen. Das bei dem Bohrvorgang entstandene gespante Knochenmaterial kann hierbei über die Spannuten und dann weiter und gemeinsam mit dem bei dem Gewindeschneidvorgang entstandenen gespante Knochenmaterial über die Gewindeschneidnuten abtransportiert werden.

Die wenigstens eine Gewindeschneidkante des ersten Gewindeabschnitts dient also insbesondere dazu, den Durchmesser des durch den Bohrerabschnitt erzeugten Bohrloches auf eine gewünschte Innengewindekontur zu erweitern. Mit der wenigstens einen Gewindeschneidkante kann ein Kieferknochen so bearbeitet werden, dass ein dem Außengewinde des ersten Gewindeabschnitts entsprechendes Innengewinde in den umgebenen Kieferknochen gedreht werden kann. Die Gewindeschneidkante ist hierbei insbesondere als Kante zwischen der Gewindeschneidnut und dem Außengewinde vorgesehen. Das Außengewinde des ersten Gewindeabschnitts ist dementsprechend als selbstschneidendes Gewinde ausgeführt. Bevorzugt befindet sich die Gewindeschneidkante an der in Drehrichtung des Außengewindes des ersten Gewindeabschnitts hintenliegenden Kante zwischen der Gewindeschneidnut und dem Außengewinde. Die Gewindeschneidkante weist folglich einen dem Gewindeprofil entsprechenden gezackten Verlauf auf und folgt dem wendelförmigen Verlauf der Gewindeschneidnut um den Schaft.

Wenn der Implantatkörper in mehreren Gewindeabschnitten zwischen der Gewindeschneidnut und dem Außengewinde jeweils eine Gewindeschneidkante aufweist, gehen die Gewindeschneidkanten der mehreren Gewindeabschnitte vorzugsweise ineinander über und bilden eine gemeinsame Gewindeschneidkante. Bei mehreren Gewindeschneidnuten kann sich zwischen jeder der Gewindeschneidnuten und dem Außengewinde eine gemeinsame Gewindeschneidkante befinden. Dabei kann bei mehreren Gewindeschneidkanten eine der Gewindeschneidkanten nur in dem ersten Gewindeabschnitt, eine weitere der Gewindeschneidkanten aber beispielsweise nur in dem zweiten Gewindeabschnitt oder aber auch in dem ersten und dem zweiten Gewindeabschnitt und/oder dem dritten Gewindeabschnitt vorgesehen sein.

Dies hat den Vorteil, dass über die gesamte Länge des ersten Gewindeabschnitts Knochenmaterial entfernt und von der Gewindeschneidnut aufgenommen und abtransportiert werden kann. Die Funktion des Außengewindes, die darin besteht, das Zahnimplantat in einem Kieferknochen zu verankern, ist dabei bevorzugt von der Funktion des Erzeugens eines Bohrloches und des Schneidens des Gewindes mittels der Gewindeschneidkante entkoppelt. Die Verankerung des Zahnimplantats in einem Kieferknochen wird bevorzugt insbesondere durch Zusammenwirken des dafür ausgebildeten Außengewindes in dem ersten Gewindeabschnitt mit dem im Kieferknochen eingeschnittenen Innengewinde erreicht.

In dem ersten Gewindeabschnitt aber auch in weiteren optionalen zweiten und/oder dritten Gewindeabschnitten können auch mehrere das Außengewinde unterbrechende Gewindeschneidnuten vorhanden sein, beispielsweise zwei oder drei Gewindeschneidnuten, die wendelförmig um zumindest einen axialen Abschnitt des Schafts verlaufen. Bevorzugt weisen die mehreren Gewindeschneidnuten jeweils wenigstens in dem ersten Gewindeabschnitt eine selbstschneidende Gewindeschneidkante auf. Wenn mehrere Gewindeschneidnuten in dem ersten Gewindeabschnitt und in weiteren optionalen zweiten und/oder dritten Gewindeabschnitten vorgesehen sind, kann zwischen einer dieser Gewindeschneidnuten und dem Außengewinde oder aber auch können zwischen mehreren dieser Gewindeschneidnuten und dem Außengewinde jeweils eine selbstschneidende Gewindeschneidkante vorgesehen sein.

Wenigstens eine Gewindeschneidnut kann sich in dem ersten Gewindeabschnitt und/oder in einem zweiten Gewindeabschnitt und/oder in einem dritten Gewindeabschnitt in Richtung des koronalen Endes des Implantatkörpers verzweigen. Dadurch, dass sich zumindest eine Gewindeschneidnut in zumindest einem der Gewindeabschnitte von apikal zu koronal hin verzweigt, kann ein Abtransport von Knochenspäne durch die Gewindeschneidnut weiter verbessert werden. Ein Verzweigen meint hierbei, dass aus einer Gewindeschneidnut zwei oder mehr Gewindeschneidnuten hervorgehen, die um den Schaft verlaufen.

Beim Bohren in den Kieferknochen fallen Knochenspäne an, die während des Bohrvorgangs aus dem Bohrloch wegbewegt werden muss. Werden die Knochenspäne nicht wirkungsvoll abtransportiert, würde ein Teil der Knochenspäne beim weiteren Eindrehen von dem Zahnimplantat verdrängt. Es kommt zur Kompression des umliegenden Knochens. Dies kann teilweise gewünscht sein, ist jedoch die Kompression zu groß, kommt es zur Beschädigung des umliegenden Knochengewebes. Dies kann zur Nekrosen, dem Gewebetod, führen.

Die wenigstens eine Gewindeschneidnut dient insbesondere dazu Knochenspäne aufzunehmen und in Richtung des apikalen Endes des Implantatkörpers abzutransportieren. Die Knochenspäne kann durch die wenigstens eine Gewindeschneidnut insbesondere soweit abtransportiert werden, dass die Knochenspäne wenigstens größtenteils aus dem Kieferknochen entfernt werden kann. Es kann also gerade ein Bohrloch mit den für das Zahnimplantat passenden Dimensionen geschaffen werden, ohne das Knochenspäne in einer Menge in dem Bohrloch verbleibt, die dafür sorgen würde, dass der Kieferknochen einer vergleichsweise hohen mechanischen Belastung ausgesetzt ist.

Dadurch, dass die Gewindeschneidnut wendelförmig um den Schaft verläuft, kann besonders effektiv Knochenspäne aufgenommen und in Richtung des koronalen Endes des Implantatkörpers abtransportiert werden, wenn das Zahnimplantat in den Kieferknochen gedreht wird. Insbesondere kann während des Eindrehens des Zahnimplantats in einen Kieferknochen effektiv und kontinuierlich Knochenspäne von der wenigstens einen wendelförmig verlaufenden Gewindeschneidnut aufgenommen werden, wobei die aufgenommenen Knochenspäne durch nachfolgende Knochenspäne aufgrund des Drehens des Zahnimplantats in Richtung des koronalen Endes des Implantatkörpers geschoben und somit abtransportiert wird.

Das erfindungsgemäße Zahnimplantat ist somit auf eine effektive Weise selbstbohrend und selbstschneidend, ohne dass das Zahnimplantat eine zu hohe Kompression eines umliegenden Knochens bewirkt, die zu einem Gewebetod führt, wenn dieses in einen Kieferknochen gedreht wird.

Das erfindungsgemäße Zahnimplantat kann direkt nach einem Öffnen von Zahnfleisch in einen Kieferknochen eingesetzt werden, ohne dass zuvor mittels zusätzlicher Aufbereitungsinstrumente ein Bohrloch erzeugt werden müsste.

Dadurch können die Anzahl der Schritte bis zum Einbringen des Zahnimplantats in einen Kieferknochen im Vergleich zu einer herkömmlichen Vorgehensweise deutlich reduziert werden. Weiterhin kann das Risiko einer Infektion, das durch das Aufbereiten der Bohrstelle durch das Verwenden mehrerer Instrumente erhöht sein kann, reduziert werden. Jedes zusätzlich eingesetzte Instrument erhöht nämlich typischerweise das Risiko, dass bei nicht ausreichender Sterilisierung oder nach zu langer, vergangener Zeit der Sterilisierung die Gefahr, dass Keime eingetragen werden. Auch besteht die Gefahr, dass während der Zeit eines Instrumentenwechsels, über das offenliegende Bohrloch Keime beispielsweise über die Luft einwandern können.

Durch ein Reduzieren der benötigten Schritte bis zum Einsetzen des Zahnimplantats kann auch der Arbeits- und Zeitaufwand deutlich verringert werden, der nötig ist, um ein Zahnimplantat einzusetzen. Dies führt in der Regel zu einer Senkung der Kosten und zu weniger Unannehmlichkeiten für einen Patienten.

Ein weiterer Vorteil des erfindungsgemäßen Zahnimplantats besteht darin, dass ein Bohrloch mit einem für das Zahnimplantat passenden Durchmesser und einer passenden Tiefe erzeugt wird. Im Gegensatz dazu besteht bei dem herkömmlichen Vorgehen das Risiko, dass mit dem finalen Tiefenbohrer nicht immer ein Bohrloch mit dem richtigen Durchmesser erzielt wird. Wenn der Durchmesser des Bohrlochs zu klein ist, kann der Knochen beim Eindrehen des Zahnimplantats stark verformt werden. Wenn hingegen der Durchmesser des Bohrlochs zu groß ist, kann es sein, dass die Befestigung des Zahnimplantats nicht ausreichend stabil ist.

Das erfindungsgemäße Zahnimplantat kann unabhängig von speziellen Instrumenten verwendet werden, die oftmals zur Erzeugung eines Bohrlochs für einen ganz bestimmten Zahnimplantattyp zu verwenden sind. Typischerweise ist es so, dass ein Zahnarzt oder eine Zahnärztin, der oder die Zahnimplantattypen unterschiedlicher Hersteller nutzen möchte, eine Vielzahl unterschiedlicher Instrumente benötigt, die jeweils zu einem ganz bestimmten Zahnimplantattyp gehören.

Da das erfindungsgemäße Zahnimplantat in der Regel nur ein einziges Mal implantiert wird, kann auch das Risiko einer starken Erhitzung des Gewebes und somit einer Nekrose reduziert werden, dass aufgrund der mehrfachen Verwendung und der dadurch bedingten Abnutzung von Bohrern, wie z.B. Tiefenbohrern, besteht.

Der erste Gewindeabschnitt ist vorzugsweise unmittelbar an den Bohrerabschnitt angrenzend angeordnet.

Der Implantatkörper ist in dem Bohrerabschnitt vorzugsweise als Spiralbohrer ausgebildet. Ein als Spiralbohrer ausgebildeter Bohrerabschnitt weist bevorzugt wenigstens eine wendelförmig verlaufende Spannut und wenigstens eine Hauptschneide auf. Vorzugsweise sind die wenigstens eine Gewindeschneidnut und die wenigstens eine Spannut als eine durchgehende Nut ausgebildet. Es ist also bevorzugt, dass die wenigstens eine Gewindeschneidnut des ersten Gewindeabschnitts in dem Bohrerabschnitt durch die wenigstens eine Spannut des Spiralbohrers fortgesetzt wird. Es ist weiterhin bevorzugt, dass, wenn der Implantatkörper in dem Bohrerabschnitt als Spiralbohrer ausgeführt ist, die Nuten des Spiralbohrers wendelförmig in die Gewindeschneidnut des ersten Gewindeabschnitts übergehen.

Wenn der Implantatkörper in dem Bohrerabschnitt als Spiralbohrer ausgebildet ist, kann der Abtransport von Knochenspäne besonders effizient umgesetzt werden. Knochenspäne kann durch das Nutprofil des Bohrerabschnitts, der als Spiralbohrer ausgeführt ist, sowie durch das Nutprofil der Gewindeschneidnut des ersten Gewindeabschnitts erfolgen. Dabei sind diese unterschiedlichen Nuten, d.h. die Spannut und die Gewindeschneidnut, bevorzugt so angeordnet, dass eine Nut aus dem Bohrabschnitt in eine Nut im ersten Gewindeabschnitt übergeht. Wenn in dem Bohrerabschnitt mehrere Spannuten und in dem ersten Gewindeabschnitt mehrere Gewindeschneidnuten ausgebildet sind, ist es bevorzugt, wenn je eine Nut aus dem Bohrabschnitt in eine Nut im ersten Gewindeabschnitt übergeht.

Hierbei wird Knochenspäne bei einem Bohrvorgang zunächst von der Spannut im Bohrabschnitt aufgenommen. Beim Eindrehen des Zahnimplantats wird Knochenspäne aus der Spannut in das Nutprofil der Gewindeschneidnut gedrückt. Der von der Gewindeschneidkante des ersten Gewindeabschnitts verdrängte Anteil der Knochenspäne kann an aus dem Bohrloch, insbesondere aus der gebohrten Knocheneintrittsöffnung austreten.

Bevorzugt setzt sich die Drehrichtung des Nutprofils einer Spannut des Spiralbohrers in der Drehrichtung des Nutprofils der Gewindeschneidnut des ersten Gewindeabschnitts fort.

Als Drehrichtung der Nuten wird insbesondere diejenige Richtung verstanden, entlang derer sich die Nut beginnend vom apikalen Ende des Implantatkörpers aus betrachtet wendelförmig um die Längsachse des Implantatkörpers dreht.

Die Drehrichtung der Nuten verläuft bevorzugt entgegen einer Eindrehrichtung des Zahnimplantats. Oder mit anderen Worten: Vorzugsweise entspricht die Drehrichtung der Nuten der Drehrichtung des Außengewindes im ersten Gewindeabschnitt. Insbesondere kann eine Drehrichtung der Spannut einer Drehrichtung des Außengewindes des ersten Gewindeabschnitts entsprechen. Diese Ausrichtung der Nuten hat den Vorteil, dass ein Abtransport von Knochenspäne aus dem Bohrloch begünstigt wird.

Ein Kieferknochen ist so aufgebaut, dass er aus einer harten und dichten äußeren Schicht (dem kortikalen Bereich) und einem poröseren, weicheren inneren Bereich (dem spongiösen Bereich) besteht. Deshalb weist der Implantatkörper in dem Bohrerabschnitt vorzugsweise kein Gewinde auf.

Die Länge des Bohrerabschnitts ist vorzugsweise mindestens drei, vorzugsweise mindestens vier Millimeter. Diese Mindestlänge übersteigt die typische Dicke der kortikalen Knochenschicht des Kieferknochens. Da der Implantatkörper in dem Bohrerabschnitt vorzugsweise kein Gewinde aufweist ist es möglich, dass sich der Implantatkörper mit seinem Bohrerabschnitt zunächst durch den kortikalen Bereich durcharbeiten kann, bevor die ersten Gewindegänge insbesondere des ersten Gewindeabschnitts zu greifen beginnen. Dies hat den Vorteil, dass die Gewindegänge des Außengewindes des ersten Gewindeabschnitts erst zu greifen beginnen, wenn der Bohrer den weicheren spongiösen Bereich des Knochens erreicht hat. Dies hat wiederum den Vorteil, dass der Vorschub, der sich aus der Steigung des Außengewindes im ersten Gewindeabschnitts für eine Bohrerumdrehung ergibt, nicht größer ist, als der Vorschub des Bohrers aufgrund der Schneidbewegung. Dadurch kann verhindert werden, dass sich eine zu hohe axiale Gegenkraft an der Bohrerspitze aus dem Vorschub der Gewindesteigung ergibt, so dass die ersten Gewindegänge im Kieferknochen ausreißen könnten.

Es ist daher bevorzugt, dass der Implantatkörper in dem Bohrerabschnitt als ein gewindefreier Bohrer mit einer Länge von zumindest 3 mm ausgebildet ist. Mit einer Länge von zumindest 3 mm besteht typischerweise nicht mehr die Gefahr, dass, wenn der Bohrerabschnitt den weicheren, spongiösen Bereich erreicht hat, der Vorschub infolge der Gewindesteigung zum Ausbruch des frisch geschnittenen Gewindes führt.

Wenn der Implantatkörper in dem Bohrerabschnitt als Spiralbohrer ausgebildet ist, ist es bevorzugt, wenn der Spiralbohrer einen Spiralwinkel hat, der zwischen 10° und 45°, vorzugsweise zwischen 15° und 40°, besonders bevorzugt zwischen 20° und 35° beträgt. Der Spiralwinkel des Spiralbohrers ergibt sich insbesondere als Winkel zwischen der Längsachse des Implantatkörpers und den Nebenschneiden. Die Nebenschneide bildet insbesondere den Übergang von Führungsfase zu Spannut. Dadurch kann ein Abtransport von Knochenspäne noch sicherer gewährleistet werden.

Es ist auch möglich, dass ein Abtransport von Knochenspäne dadurch weiter verbessert wird, dass der Spiralwinkel des Spiralbohrers dem Winkel zwischen der Längsachse des Implantatkörpers und der Gewindeschneidkante im ersten Gewindeabschnitt entspricht.

Wenn der Implantatkörper in dem Bohrerabschnitt als Spiralbohrer ausgebildet ist, ist es weiterhin bevorzugt, wenn der Spiralbohrer einen Spitzenwinkel hat, der zwischen 105° und 170°, vorzugsweise zwischen 115° und 150°, besonders bevorzugt zwischen 120° und 135°beträgt. Der Spitzenwinkel des Spiralbohrers ist insbesondere der Winkel zwischen den Hauptschneiden an der Spitze des Bohrers. Entsprechend bedeutet ein kleiner Spitzenwinkel typischerweise vergleichsweise lange und ein großer Spitzenwinkel hingegen vergleichsweise kurze Hauptschneiden. Je größer der Spitzenwinkel ist, umso geringer ist in der Regel die zum Anbohren benötigte Zeit.

Insbesondere dann, wenn das Zahnimplantat nicht mittig oder aber nicht senkrecht in den Kieferkamm gesetzt werden soll, ist insbesondere ein vergleichsweise kleiner Spitzenwinkel bevorzugt. Dadurch kann sichergestellt werden, dass der Übergang der Hauptschneiden zu den Nebenschneiden am Umfang des Bohrerabschnitts nicht in Kontakt zum Knochen kommt, bevor z.B. eine optional an dem apikalen Ende des Implantatkörpers vorgesehene Zentrierspitze eine sichere Führung des Zahnimplantats ermöglicht. Dies hat den Vorteil, dass das Zahnimplantat kontrolliert an der dafür vorgesehenen Stelle in einen Kieferknochen eingebracht werden kann.

Wenn der Implantatkörper in dem Bohrerabschnitt als Spiralbohrer ausgebildet ist, kann dieser zwei oder mehr Hauptschneiden aufweisen, vorzugsweise drei oder mehr Hauptschneiden aufweisen. Dadurch kann der Vorschub des Bohrers erhöht werden, da pro Umdrehung des Implantats mehr Knochenmaterial abgetragen werden kann.

Vorzugsweise verjüngt sich ein Kerndurchmesser des Implantatkörpers in dem ersten Gewindeabschnitt in Richtung des apikalen Endes. Vorzugsweise verjüngt sich ein Kerndurchmesser des Implantatkörpers in dem ersten Gewindeabschnitt konisch. Da der Implantatkörper in dem ersten Gewindeabschnitt eine Gewindeschneidnut aufweist, wird der Durchmesser eines Bohrlochs sukzessive vergrößert, wenn der sich in dem ersten Gewindeabschnitt in Richtung des apikalen Endes verjüngende Implantatkörper in einen Kieferknochen eingedreht wird. Ein Bohrloch kann so Stück für Stück und auf vergleichsweise schonende Weise auf einen bestimmten Durchmesser vergrößert werden. Dabei kann vorgesehen sein, dass der Kerndurchmesser und/oder der Außendurchmesser des Gewindes im gewindeschneidenden Abschnitt des Implantatkörpers kleiner ist als der Kerndurchmesser oder der Außendurchmesser des Gewindes im koronal davon liegenden, nicht-schneidenden Abschnitt des Implantatkörpers. Hierdurch wird eine gezielte Kompression erreicht, welche die Primärstabilität erhöht und das Einwachsen des Implantatkörpers begünstigen kann. In anderen Ausgestaltungen ist es vorteilhaft, wenn der Kerndurchmesser und/oder der Außendurchmesser des Gewindes im gewindeschneidenden Abschnitt des Implantatkörpers dem Kerndurchmesser oder dem Außendurchmesser Gewindes im koronal davon liegenden nicht-schneidenden Abschnitt entspricht, was eine weitestgehend kompressionsfreie Einbringung ermöglicht.

In bevorzugten Ausgestaltungen kann die Gewindeschneidnut als eine Spantransportnut in dem nicht-gewindeschneidenden Gewindeabschnitt des Implantatkörpers vortgeführt werden. Hierbei ist die Spantransportnut mit einer nicht schneidenden (z.B. verrundeten) Kante zur Gewindeumfangsfläche hin ausgebildet und dient nur dem Spanabtransport.

Der Implantatkörper kann einen Hinterschnitt aufweisen, der in Richtung des koronalen Endes an die selbstschneidende Gewindeschneidkante des ersten Gewindeabschnitts angrenzend angeordnet ist. Ein Hinterschnitt hat den Vorteil, dass ein Widerstand beim Eindrehen des Zahnimplantats infolge der Reibung verringert werden kann. Ein Hinterschnitt kann beispielweise durch ein radiales Zurückschleifen des Zahnprofils in Umfangrichtung erzeugt werden.

Der Schaft kann einen zweiten Gewindeabschnitt umfassen, der sich vorzugsweise in Richtung des koronalen Endes an den ersten Gewindeabschnitt anschließt. Der Implantatkörper weist in dem zweiten Gewindeabschnitt bevorzugt ein Außengewinde auf. Die Gewindeschneidnut des ersten Gewindeabschnitts kann sich in dem zweiten Gewindeabschnitt wendelförmig um den Schaft verlaufend fortsetzen. Der Implantatkörper kann so ausgebildet sein, dass dieser in dem zweiten Gewindeabschnitt keine selbstschneidende Gewindeschneidkante aufweist.

Alternativ kann jedoch auch vorgesehen sein, dass der Implantatkörper in dem ersten Gewindeabschnitt und in dem zweiten Gewindeabschnitt eine selbstschneidende Gewindeschneidkante aufweist. Die wenigstens eine Gewindeschneidkante des ersten Gewindeabschnitts wird dann vorzugsweise als Gewindeschneidkante in dem zweiten Gewindeabschnitt fortgesetzt.

Wenn der Implantatkörper in dem ersten Gewindeabschnitt und in dem zweiten Gewindeabschnitt eine selbstschneidende Gewindeschneidkante hat, hat dies den Vorteil, dass ein Abtransport von Knochenspäne noch weiter verbessert werden kann, indem Knochenspäne in die Gewindeschneidnut dieses zweiten Gewindeabschnitts befördert wird. Darüber hinaus kann die überschüssige, vom Zahnimplantat verdrängte Knochenspäne während des Eindrehens des Zahnimplantats in einen Kieferknochen aus der gebohrten Knocheneintrittsöffnung austreten.

Der zweite Gewindeabschnitt des Schafts weist vorzugsweise einen zylindrischen Kerndurchmesser auf. Der zweite Gewindeabschnitt des Schafts ist insbesondere dafür vorgesehen, das Zahnimplantat in einem Kieferkonchen zu verankern.

Der Implantatkörper weist in dem zweiten Gewindeabschnitt bevorzugt ein Außengewinde auf, das in das Außengewinde des ersten Gewindeabschnitts übergeht. Das Außengewinde des zweiten Gewindeabschnitts hat vorzugsweise eine konstante Gewindetiefe.

Vorzugsweise weist ein Kerndurchmesser des Implantatkörpers in dem zweiten Gewindeabschnitt einen konstanten Radius auf. Wenn sich der Implantatkörper in dem ersten Gewindeabschnitt in Richtung des apikalen Endes verjüngt und der Implantatkörper einen zweiten Gewindeabschnitt aufweist, verjüngt sich der Implantatkörper in dem ersten Gewindeabschnitt vorzugsweise von dem Radius des Kerndurchmessers des Implantatkörpers des zweiten Gewindeabschnitts ausgehend. In anderen Worten nimmt der Kerndurchmesser des Außengewindes in dem ersten Abschnitt vorzugsweise von apikal in Richtung des zweiten Gewindeabschnitts bis zum Erreichen des Radius des Kerndurchmessers des Implantatkörpers in dem zweiten Gewindeabschnitt zu.

Der Schaft kann einen dritten Gewindeabschnitt umfassen, der sich in Richtung des koronalen Endes an den zweiten Gewindeabschnitt anschließt. Falls kein zweiter Gewindeabschnitt vorhanden ist, schließt sich der dritte Gewindeabschnitt insbesondere an den ersten gewindeabschnitt an.

In dem dritten Gewindeabschnitt weist der Implantatkörper bevorzugt ein Außengewinde auf, das in das Außengewinde des zweiten Gewindeabschnitts übergeht.

Vorzugsweise setzt sich die Gewindeschneidnut des ersten und zweiten Gewindeabschnitts in dem dritten Gewindeabschnitt fort. Die Gewindeschneidnut verläuft bevorzugt in dem dritten Gewindeabschnitt wendelförmig um den Schaft. Vorzugweise weist der Implantatkörper in dem dritten Gewindeabschnitt keine selbstschneidende Gewindeschneidkante auf.

Für den Fall, dass das Zahnimplantat einen dritten Gewindeabschnitt mit einem Außengewinde aufweist, ist das Außengewinde in dem dritten Gewindeabschnitt vorzugsweise so ausgeführt, dass es dieselbe Steigung wie das Außengewinde in dem zweiten Gewindeabschnitt aufweist.

Das Außengewinde des dritten Gewindeabschnitts kann auch als mehrgängiges Außengewinde ausgebildet sein. Ein mehrgängiges Außengewinde hat insbesondere mehr als einen Gewindeanfang. Ein mehrgängiges Außengewinde hat in der Regel mehrere Anschnitte und Gänge aber nur eine Steigung. Mehrere Gewinde des mehrgängigen Außengewindes laufen insbesondere parallel zueinander. Vorzugsweise ist das Außengewinde des dritten Gewindeabschnitts als mehrgängiges, vorzugsweise zweigängiges Außengewinde ausgebildet ist, das dieselbe Steigung wie das Außengewinde in dem ersten Gewindeabschnitt hat.

Falls an den zweiten Gewindeabschnitt in Richtung des koronalen Endes des Implantatkörpers ein dritter Gewindeabschnitt mit einem Außengewinde und/oder mit einer Gewindeschneidnut angeordnet ist, kann ein Abtransport von Knochenspäne noch weiter verbessert werden, z.B. indem die Gewindeschneidnut des zweiten Gewindeabschnitts als Gewindeschneidnut im dritten Gewindeabschnitt fortgesetzt wird. In diesem Fall wird beim Implantieren des Zahnimplantats Knochenspäne in die Gewindeschneidnut des dritten Gewindeabschnitts befördert. Überschüssige, vom Zahnimplantat verdrängte Knochenspäne kann außerdem während des Eindrehens des Zahnimplantats in einen Kieferknochen aus der gebohrten Knocheneintrittsöffnung austreten.

Der Implantatkörper kann in dem dritten Gewindeabschnitt einen Kerndurchmesser mit einer zylindrischen Form oder mit einer Konusform haben.

Die Gewindeschneidnut oder - falls mehrere Gewindeschneidnuten vorhanden sind - die mehreren Gewindeschneidnuten können in wenigstens einem der Gewindeabschnitte, also insbesondere in dem ersten, zweiten und/oder dritten Gewindeabschnitt, einen Nutgrund mit einer Oberflächenrauigkeit aufweisen, die zwischen 0,8 µm und 3,2 µm beträgt.

Alternativ kann die Gewindeschneidnut oder - falls mehrere Gewindeschneidnuten vorhanden sind - können die mehrere Gewindeschneidnuten in wenigstens einem der Gewindeabschnitte, also insbesondere in dem ersten, zweiten und/oder dritten Gewindeabschnitt, einen Nutgrund mit einer Oberflächenrauigkeit von weniger als 0,8 µm und mehr als 0,1 µm aufweisen.

Es ist möglich, dass der Nutgrund einer Gewindeschneidnut dieselbe Oberflächenrauigkeit aufweist, wie der Implantatkörper in dem ersten und/oder zweiten Gewindeabschnitt. Dies hat zum einen den Vorteil, dass die Oberflächenrauigkeit, die erst nach der Formgebung des Zahnimplantats insbesondere durch Ätzen und/oder Abstrahlen mit Korund aufgebracht wird, einheitlich auf diese Bereiche aufgebracht werden kann. Die Nuten müssen also nicht durch besondere Maßnahmen vor dem Anrauen geschützt werden. Darüber hinaus verbessert die raue Oberfläche im Nutgrund das Anwachsen des Knochens, so dass die Anbindung des neu entstandenen Knochens verbessert wird.

Alternativ dazu kann der Nutgrund einer Gewindeschneidnut auch glatt sein. Das heißt, dass die maschinierte Oberfläche erhalten bleibt. Das kann beispielsweise dadurch erzielt werden, dass während eines Anrauprozesses der Außengewindebereiche des Schafts durch Ätzen und/oder Abstrahlen mit Korund der Nutgrund einer Gewindeschneidnut, der zur Aufnahme und Abtransport der Knochenspäne eingebracht wurde, maskiert wird. Ein glatter Nutgrund einer Gewindeschneidnut hat den Vorteil, dass der Reibungswiderstand verringert und so den Abtransport der Knochenspäne begünstigt werden kann.

Bevorzugt ist das Zahnimplantat derart ausgebildet, dass die beim Eindrehen in einen Kieferknochen erzeugte Knochenspäne durch die wenigstens eine Gewindeschneidnut bei einer vergleichsweise geringeren Kompression der Knochenspäne in dem Bohrloch abtransportiert werden kann. Eine höhere Kompression der Knochenspäne bringt die Gefahr der "necrosis", dem Gewebetod des umgebenen Knochens mit sich. Darüber hinaus führt ein verbesserter Abtransport der Knochenspäne auch zu einer Reduzierung des Bohrwiderstands. Es wird also ein geringeres Drehmoment benötigt, um das Implantat in den Kiefer eindrehen zu können. Diese Vorteile werden insbesondere durch ein Zahnimplantat realisiert, das wie vorstehend beschrieben in einem Bohrerabschnitt einen Spiralbohrer aufweist, dessen Spannut in eine Gewindeschneidnut übergeht, die wendelförmig um den Schaft des Implantatkörpers verläuft.

Der Schaft kann einen optionalen vierten Abschnitt aufweisen, der sich in Richtung des koronalen Endes vorzugsweise an den dritten Gewindeabschnitt anschließt. Falls der Implantatkörper keinen dritten Gewindeabschnitt aufweist, schließt sich der vierte Abschnitt vorzugsweise an den ersten oder falls vorhanden an den zweiten Gewindeabschnitt an.

In dem vierten Abschnitt weist der Schaft bevorzugt eine glatte Oberfläche auf, d.h. in dem vierten Abschnitt weist die Oberfläche des Schafts weder ein Außengewinde noch eine Gewindeschneidnut auf. Insbesondere befindet sich in dem vierten Abschnitt keine Gewindeschneidnut, die als Fortführung der Gewindeschneidnut eines der anderen Gewindeabschnitte, beispielsweise des dritten Gewindeabschnitts zu sehen ist. Der Kerndurchmesser des Schafts kann über die Länge des vierten Abschnitts beispielsweise konisch oder zylindrisch sein.

Das Zahnimplantat kann weiterhin ein Abutment umfassen, das sich an das koronale Ende des Implantatkörpers anschließt und das mit dem Schaft fest, vorzugsweise stoffschlüssig, verbunden ist.

Das Abutment ist bevorzugt so gestaltet, dass eine prothetische Versorgung vorzugsweise durch zementieren oder durch eine adhäsive Befestigung direkt darauf befestigt werden kann. Das heißt, dass kein Zwischenelement auf das Implantat durch eine Schraubverbindung aufgesetzt werden muss, um eine prothetische Versorgung wie zum Beispiel eine Krone oder Brücke befestigen zu können.

Optional kann das Zahnimplantat weiterhin eine Aufnahmestruktur umfassen, die formschlüssig zur Drehmomentübertragung um die Längsachse des Implantatkörpers ausgebildet ist. Die Aufnahmestruktur ist vorzugsweise eine über das koronale Ende des Zahnimplantats zugängliche Aufnahme, die dazu ausgebildet ist, ein Einbringwerkzeug aufzunehmen. Die Aufnahmestruktur kann als Teil des Abutments ausgebildet sein, vorzugsweise als eine in dem Abutment ausgebildete Nut, die zum Aufnehmen eines Einbringwerkzeugs geöffnet ist.

In die Aufnahmestruktur kann insbesondere komplementär zur Aufnahmestruktur ausgebildetes Einbringwerkzeug eingeführt werden, um mit diesem das Zahnimplantat in einen Kieferknochen einzudrehen. Ein Einbringwerkzeug kann beispielsweise eine Handratsche oder ein elektrisch betriebenes Gerät sein, das ausgebildet ist, das notwendige Drehmoment und die Anpresskraft aufzubringen, um das Zahnimplantat in den Kiefer einzudrehen.

Vorzugsweise weist der Implantatkörper an seinem apikalen Ende eine Zentrierspitze auf. An die Zentrierspitze schließt sich dann der Bohrerabschnitt an und erstreckt sich in Richtung des koronalen Endes des Implantatkörpers. Die Zentrierspitze ist bevorzugt so ausgebildet, dass das Zahnimplantat mittels der Zentrierspitze relativ zu einem Kieferknochen ausgerichtet werden kann. Die Zentrierspitze kann insbesondere ein punktgenaues Anbohren ermöglichen und ein Verlaufen des Zahnimplantats verhindern. Ein Verlaufen des Zahnimplantats ist insbesondere dann möglich, wenn das Zahnimplantat in einen zu schmalen Kieferkamm gesetzt werden soll, oder wenn nicht senkrecht in den Kieferkamm eingesetzt werden soll, oder wenn das Zahnimplantat lingual oder bukkal versetzt zum Kieferkamm gesetzt werden soll.

Die Zentrierspitze hat vorzugsweise eine Länge, die zwischen 1 mm und 3 mm, vorzugsweise zwischen 1,5 mm und 2,5 mm beträgt.

Bevorzugt ist die Zentrierspitze mittig zu den Hauptschneiden des Bohrers in Längsrichtung des Zahnimplantats ausgerichtet. Dabei weist die Zentrierspitze insbesondere einen Winkel von weniger als 90°, bevorzugt von weniger als 60° auf. Die Zentrierspitze kann beispielsweise eine Kegelform, oder die Form einer dreiseitigen oder vierseitigen Pyramide haben.

Zusätzlich oder alternativ kann die Zentrierspitze in einem Kontaktbereich zu dem Bohrerabschnitt eine Ausdehnung senkrecht zu der Längsachse des Implantatkörpers haben, die weniger als ein Drittel des Durchmessers des Implantatkörpers in dem Bohrerabschnitt, vorzugsweise weniger als ein Viertel des Durchmessers des Implantatkörpers in dem Bohrerabschnitt, beträgt. Die Zentrierspitze kann insbesondere rotationssymmetrisch spitz ausgeführt sein.

Bevorzugte Ausführungsformen der Erfindung werden nachfolgend beispielhaft anhand der beiliegenden Figuren erläutert. Von den Figuren zeigt:
- Fig. 1:: ein schematisch dargestelltes Zahnimplantat mit einem Spiralbohrer und mehreren Gewindeabschnitten, in denen sich eine Spannut des Spiralbohrers als Gewindeschneidnut fortsetzt; und
- Fig. 2:: ein schematisch dargestelltes Zahnimplantat mit einem Spiralbohrer und mehreren Gewindeabschnitten und einem Abutment mit einer Aufnahmestruktur, in die zum Implantieren des Zahnimplantats ein Einbringwerkzeug eingeführt werden kann.

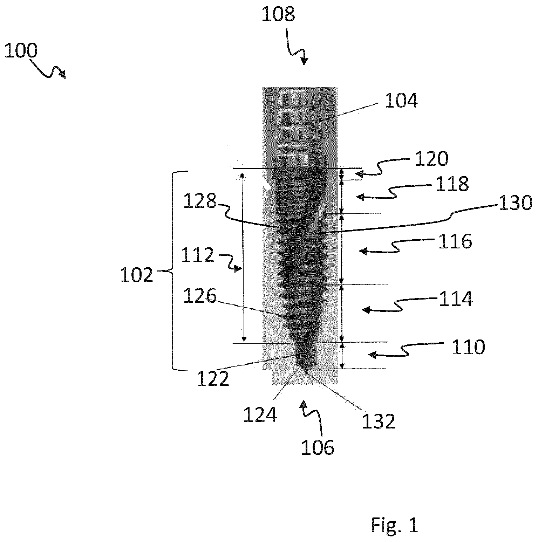

Figur 1 zeigt ein schematisch dargestelltes Zahnimplantat 100 in einer Seitenansicht. Das Zahnimplantat 100 umfasst einen Implantatkörper 102 und ein Abutment 104. Der Implantatkörper 102 erstreckt sich in einer Längsrichtung des Implantatkörpers 102 von seinem apikalen Ende 106 zu seinem koronalen Ende 108.

Der Implantatkörper 102 umfasst einen Bohrerabschnitt 110 und einen Schaft 112. In dem Bohrerabschnitt 110 ist der Implantatkörper 102 zum Bohren eines Bohrloches in einen Kieferknochen ausgebildet. Durch den Bohrerabschnitt 110 ist das Zahnimplantat 100 selbstbohrend. Es muss daher nicht mittels zusätzlicher Aufbereitungsinstrumente ein Bohrloch erzeugt werden, um das Zahnimplantat 100 in einen Kieferknochen einzusetzen, sondern das Einsetzen des Zahnimplantats 100 in einen Kieferknochen kann direkt nach einem Öffnen des Zahnfleischs erfolgen.

Der Bohrerabschnitt 110 befindet sich an das apikale Ende des Schafts 112 angrenzend. Der Schaft 112 verbindet somit den Bohrerabschnitt 110 mit dem Abutment 104. Der Implantatkörper 102 umfassend den Bohrerabschnitt 110 und den Schaft 112 ist vorzugsweise aus einem Stück gefertigt. Das Abutment 104 ist mit dem Schaft 112 fest und stoffschlüssig verbunden.

Der Schaft 112 umfasst einen ersten Gewindeabschnitt 114, der in Richtung des koronalen Endes 108 unmittelbar an den Bohrerabschnitt 110 angrenzend angeordnet ist und in dem der Implantatkörper 102 ein Außengewinde aufweist. Sich in Richtung des koronalen Endes108 an den ersten Gewindeabschnitt 114 anschließend umfasst der Schaft 112 einen zweiten Gewindeabschnitt 116. Der Schaft 112 weist auch einen dritten Gewindeabschnitt 118 auf, der sich in Richtung des koronalen Endes 108 an den zweiten Gewindeabschnitt 116 anschließt. Zwischen dem Abutment 104 und dem dritten Gewindeabschnitt 118 weist der Schaft einen vierten Abschnitt 120 auf.

In dem ersten Gewindeabschnitt 114, dem zweiten Gewindeabschnitt 116 und dem dritten Gewindeabschnitt 118 weist der Schaft 112 ein Außengewinde auf. Das Außengewinde dient der Verankerung des Zahnimplantats 100 in einem Kieferknochen. Wenn das Zahnimplantat 100 in einen Kieferknochen eingesetzt ist, kann eine prothetische Versorgung wie zum Beispiel eine Krone oder Brücke durch zementieren oder adhäsiver Befestigung auf dem Abutment 104 befestigt werden. Das Zahnimplantat 100 dient dann als Träger für die Krone oder Brücke und erfüllt die Funktion einer künstlichen Zahnwurzel.

In dem vierten Abschnitt 120 weist der Schaft 112 eine glatte Oberfläche und insbesondere kein Außengewinde auf.

In dem Bohrerabschnitt 110 ist der Implantatkörper 102 als Spiralbohrer mit einer wendelförmig verlaufenden Spannut 122 und zwei Hauptschneiden 124 ausgebildet. Die Spannut 122 beginnt von den Hauptschneiden 124 ausgehend und verläuft wendelförmig um den Implantatkörper 102 in Richtung des koronalen Endes 108. Die Spannut 122 hat ein Nutprofil, das zur Aufnahme und zum Abtransport von Knochenspäne dient.

Der Spiralwinkel des Spiralbohrers beträgt 25°. In anderen hier nicht gezeigten Ausführungsbeispielen beträgt der Spiralwinkel zwischen 10° und 45°, insbesondere zwischen 15° und 40°, besonders bevorzugt zwischen 20° und 35°.

Der Spitzenwinkel des Spiralbohrers, also der Winkel zwischen den beiden Hauptschneiden 124 beträgt 122°. Alternativ kann der Spitzenwinkel zwischen 105° und 170°, vorzugsweise zwischen 115° und 150°, besonders bevorzugt zwischen 120° und 135° betragen.

Der Bohrerabschnitt 110 hat eine Länge von 4 mm, kann in alternativen Ausführungsbeispielen aber auch kürzer oder länger sein, hat aber eine Länge von mindestens 3 mm. Eine Länge von mindestens 3 mm ist vorteilhaft, weil bei einer solchen Länge davon ausgegangen werden kann, dass, wenn der Bohrerabschnitt 110 beim Implantieren des Zahnimplantats 100 den weicheren, spongiösen Bereich eines Kieferknochens erreicht hat, der Vorschub infolge der Gewindesteigung des Außengewindes, insbesondere des ersten Gewindeabschnitts 114, nicht zum Ausbruch des frisch geschnittenen Gewindes führt.

Die Spannut 122 des Spiralbohrers 110 setzt sich in einer Gewindeschneidnut 126 fort, die wendelförmig in dem ersten Gewindeabschnitt 114, dem zweiten Gewindeabschnitt 116 und dem dritte Gewindeabschnitt 118 um den Schaft 112 verläuft. Spannut 122 und Gewindeschneidnut 126 bilden eine gemeinsame durchgehende Nut. Die Gewindeschneidnut 126 unterbricht dabei das Außengewinde in dem ersten Gewindeabschnitt 114, dem zweiten Gewindeabschnitt 116 und dem dritten Gewindeabschnitt 118.

In dem ersten Gewindeabschnitt 114 des Implantatkörpers 102 vergrößert sich der Kerndurchmesser des Außengewindes ausgehend vom Außendurchmesser des Implantatkörpers 102 in dem Bohrerabschnitt 110 hin zum Kerndurchmesser des zweiten Gewindeabschnitts 116.

In dem ersten Gewindeabschnitt 114 weist der Schaft 112 eine selbstschneidende Gewindeschneidkante 128 auf. Die Gewindeschneidkante 128 ist die Kante im Übergang von der Gewindeschneidnut 126 und dem Außengewinde. Die selbstschneidende Gewindeschneidkante 128 bewirkt, dass bei m Implantieren des Zahnimplantats 100 sowohl das Außengewinde des Schafts 102 in den Kieferknochen gedreht wird als auch, dass der Durchmesser des mit dem Spiralbohrer gebohrten Bohrlochs vergrößert wird. Die selbstschneidende Gewindeschneidkante 128 ist an der Gewindeschneidnut 126 des ersten Gewindeabschnitts 114 angebracht. Das Zahnimplantat 100 ist somit nicht nur selbstbohrend, sondern auch selbstschneidend.

Die Spannut 122 des Bohrerabschnitts 110 geht in die Gewindeschneidnut 126 des ersten Gewindeabschnitts 114 über, so dass beim Implantieren des Zahnimplantats 100 Knochenspäne von dem Bohrerabschnitt 110 in den ersten Gewindeabschnitt 114 befördert werden kann. Dadurch kann Knochenspäne wirkungsvoll abtransportiert und eine Kompression des umliegenden Knochens verhindert werden.

Die Gewindeschneidnut 126 hat den gleichen Drehwinkel wie die Spannut 122. Weiterhin hat die Gewindeschneidnut 126 auch den gleichen Winkel wie die Spannut 122. Dabei entspricht die Drehrichtung der Spannut 122 und der Drehwinkel der Gewindeschneidnut 126 der Drehrichtung des Außengewindes in dem ersten Gewindeabschnitt 114.

In dem zweiten Gewindeabschnitt 116 des Implantatkörpers 102 setzt sich die Gewindeschneidnut 126 aus dem ersten Gewindeabschnitt 114 fort, wobei die Gewindeschneidnut 126 des zweiten Gewindeabschnitts 116 denselben Nutwinkel hat.

Der Nutgrund der Gewindeschneidnut 126 im ersten Gewindeabschnitt 114 und im zweiten Gewindeabschnitt 116 sind durch Strahlen mit Korund und anschließendem Ätzen angeraut. Hierbei wurde der Bohrerabschnitt 110 sowie eine apikal an dem Bohrerabschnitt 110 angeordnete Zentrierspitze 132 des Implantatkörpers 102 maskiert, so dass diese Bereiche die ursprünglich maschinierte Oberfläche aufweisen.

In dem dritten Gewindeabschnitt 118 weist der Schaft 112 des Implantatkörpers 102 ein zweigängiges Außengewinde auf. Die Gewindegänge des zweigängigen Außengewindes weisen kleinere Nutbereiten als die Nutbereiten der Außengewinde des ersten Gewindeabschnitts 114 und des zweiten Gewindeabschnitts 116 auf. Da die Steigung der Gewindegänge des zweigängigen Außengewindes in dem dritten Gewindeabschnitt 118 der Steigung des Außengewindes in dem zweiten Gewindeabschnitt 116 entspricht, ist hier ein zweigängiges Außengewinde eingebracht, wodurch die die Stegbreite entsprechend reduziert wird. In dem dritten Gewindeabschnitt 118 ist der Schaft 112 des Implantatkörpers 102 zylindrisch ausgeführt. Alternativ kann der Schaft 112 in dem dritten Gewindeabschnitt 118 auch eine andere Form haben, wie zum Beispiel eine Konusform.

In dem vierten Abschnitt 120, der zwischen dem dritten Gewindeabschnitt 118 und dem Abutment 104 angeordnet ist, weist der Schaft 112 des Implantatkörpers 102 eine glatte Oberfläche und insbesondere weder ein Außengewinde noch eine Gewindeschneidnut 126 auf. Der vierte Abschnitt 120 ist dafür vorgesehen, dass sich nach dem Implantieren des Zahnimplantats 100 in diesem Bereich das Zahnfleisch an den Schaft 112 anlegen kann. Der übrige Teil des Implantatkörpers 102, d.h. insbesondere der Bohrerabschnitt 110, der erste Gewindeabschnitt 114, der zweite Gewindeabschnitt 116 und der dritte Gewindeabschnitt 118 befinden sich dann innerhalb des Bohrloches in dem Kieferknochen, um das Zahnimplantat 100 fest zu verankern. Da der vierte Abschnitt 120 keine Gewindeschneidnut 126 aufweist, dient dieser nicht dazu Knochenspäne aus dem dritten Gewindeabschnitt 118 weiter zu transportieren. Während des Implantierens des Zahnimplantats 100 kann also solange Knochenspäne aus dem Bohrloch entfernt werden, wie sich die Gewindeschneidnut 126 des dritten Gewindeabschnitts 118 wenigstens noch teilweise außerhalb des Bohrloches befindet.

Der Implantatkörper 102 weist an seinem apikalen Ende 106 eine Zentrierspitze 132 auf, die sich in Richtung des apikalen Endes 106 an den Bohrerabschnitt 110 anschließt. Mittels der Zentrierspitze 132 kann das Zahnimplantat 100 relativ zu einem Kieferknochen ausgerichtet werden. Die Zentrierspitze 132 hat eine Länge von 1 mm. Alternativ kann aber auch eine Zentrierspitze mit einer Länge größer 1 mm und vorzugsweise kleiner 3 mm vorgesehen sein. Die Zentrierspitze 132 hat eine Kegelform, könnte aber auch einer anderen Form, wie die einer dreiseitigen oder vierseitigen Pyramide haben.

Das Abutment 104 ist stoffschlüssig mit dem Schaft 112 verbunden und dient dazu, einen Zahnersatz wie eine Krone oder ein Teil einer Brücke mit dem Zahnimplantat 100 zu befestigen. Das Abutment 104 umfasst eine Aufnahmestruktur, die in Richtung des koronalen Endes 108 zum Aufnehmen eines Einbringwerkzeugs geöffnet ist. Das Einbringwerkzeug weist bevorzugt einen komplementär zu der Aufnahmestruktur ausgebildeten Teil auf, der in die Aufnahmestruktur eingeführt werden kann, um mit dem Einbringwerkzeug das notwendige Drehmoment und die Anpresskraft aufzubringen, um das Zahnimplantat 100 in einen Kieferknochen einzudrehen.

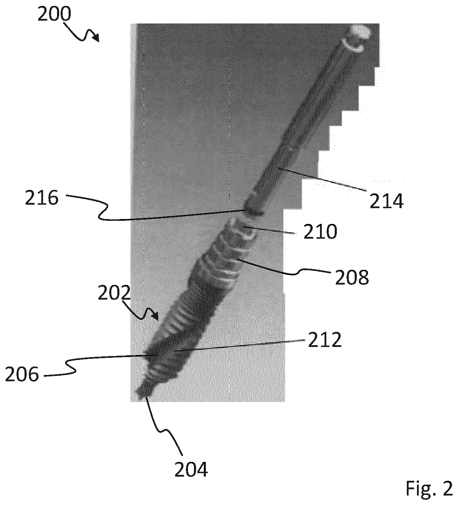

Figur 2 zeigt ein Zahnimplantat 200, das wie das in Bezug auf Figur 1 beschriebene Zahnimplantat 100 einen Implantatkörper 202 mit einem als Spiralbohrer ausgeführten Bohrerabschnitt 204 und einem Schaft 206 aufweist und ein mit dem Schaft 206 verbundenes Abutment 208. Das Abutment 208 weist eine Aufnahmestruktur 210 auf. Der Schaft 206 ist identisch zu dem wie mit Bezug auf Figur 1 beschriebenen Schaft 112 des Zahnimplantats 100 ausgebildet und weist insbesondere in einem ersten, zweiten und dritten Gewindeabschnitt ein Außengewinde auf. Der Spiralbohrer 204 umfasst eine Spannut, die sich in dem ersten, zweiten und dritten Gewindeabschnitt als Gewindeschneidnut 212 fortsetzt, die wendelförmig um den Schaft in Richtung des koronalen Endes verläuft und dem Abtransport von Knochenspäne dient. An der Gewindeschneidnut 212 ist in dem ersten Gewindeabschnitt eine Gewindeschneidkante 213 angebracht, die dazu dient beim Implantieren des Zahnimplantats 200 das Außengewinde des Schafts 206 in den Kieferknochen zu drehen und den Durchmesser eines mit dem Spiralbohrer gebohrten Bohrlochs zu vergrößern.

Zusätzlich ist ein Einbringwerkzeug 214 vorgesehen, das ausgebildet ist, mit einem komplementär zu der Aufnahmestruktur 210 des Zahnimplantats 200 ausgebildeten Teil 216 in die Aufnahmestruktur 210 eingeführt zu werden, um dann mit der Aufnahmestruktur 210 formschlüssig verbunden zu sein. Wenn das Einbringwerkzeug 214 mit dem Zahnimplantat 200 verbunden ist, kann durch Drehen des Einbringwerkzeugs 214 ein Drehmoment auf das Zahnimplantat 200 übertragen werden, um so das Zahnimplantat 200 in einen Kieferknochen einzubringen.

Die Aufnahmestruktur 210 ist so ausgeführt, dass innerhalb des Umfangs einer Bohrung, die entlang der Längsachse des Implantatkörpers 202 ausgerichtet ist, Nuten angeordnet sind. Das Einbringwerkzeug 214 weist an einem Ende einen komplementär zu der Aufnahmestruktur 210 des Zahnimplantats 200 ausgebildeten Teil 216 auf, der einen zur Bohrung der Aufnahmestruktur 210 passenden zylindrischen Querschnitt mit zumindest zwei Erhebungen hat, die um 180° versetz angeordnet sind und eine axiale Ausdehnung haben, die es erlaubt, dass der komplementäre Teil 216 in die Nuten der Aufnahmestruktur 210 eingeführt werden kann, um so einen Formschluss zwischen dem Zahnimplantat 200 und dem Einbringwerkzeug 214 zu erzeugen.

### Bezugszeichenliste

- 100: Zahnimplantat
- 102: Implantatkörper
- 104: Abutment
- 106: apikales Ende
- 108: koronales Ende
- 110: Bohrerabschnitt
- 112: Schaft
- 114: erster Gewindeabschnitt
- 116: zweiter Gewindeabschnitt
- 118: dritter Gewindeabschnitt
- 120: vierter Abschnitt
- 122: Spannut
- 124: Hauptschneiden
- 126: Gewindeschneidnut
- 128: selbstschneidende Gewindeschneidkante
- 132: Zentrierspitze
- 200: Zahnimplantat
- 202: Implantatkörper
- 204: Spiralbohrer
- 206: Schaft
- 208: Abutment
- 210: Aufnahmestruktur
- 212: Gewindeschneidnut
- 213: Gewindeschneidkante
- 214: Einbringwerkzeug
- 216: zur Aufnahmestruktur komplementäre Teil des Einbringwerkzeugs

## Patentansprüche

1. Zahnimplantat (100, 200), mit einem Implantatkörper (102, 202), der sich in einer Längsrichtung des Implantatkörpers (102, 202) von seinem apikalen Ende (106) zu seinem koronalen Ende (108) erstreckt, wobei der Implantatkörper (102, 202)
- einen am apikalen Ende (106) angeordneten Bohrerabschnitt (110, 204) aufweist, in dem der Implantatkörper (102, 202) zum Bohren eines Bohrloches in einen Kieferknochen ausgebildet ist, und
- einen sich an den Bohrerabschnitt (110, 204) in Richtung des koronalen Endes (108) anschließenden Schaft (112, 206) aufweist, der
- einen ersten Gewindeabschnitt (114) umfasst, in dem der Implantatkörper (102, 202) ein Außengewinde aufweist, wobei
der Implantatkörper (102, 202) in dem ersten Gewindeabschnitt (114) wenigstens eine das Außengewinde unterbrechende Gewindeschneidnut (126, 212) aufweist, die wendelförmig um zumindest einen axialen Abschnitt des Schafts (112, 206) verläuft und wenigstens in dem ersten Gewindeabschnitt (114) eine zwischen der Gewindeschneidnut (126, 212) und dem Außengewinde verlaufende selbstschneidende Gewindeschneidkante (128) umfasst.

2. Zahnimplantat (100, 200) nach Anspruch 1, wobei der Implantatkörper (102, 202) in dem Bohrerabschnitt (110, 204) als Spiralbohrer mit wenigstens einer wendelförmig verlaufenden Spannut (122) und wenigstens einer Hauptschneide (124) ausgebildet ist, wobei die wenigstens eine Gewindeschneidnut (126, 212) und die wenigstens eine Spannut (122) als eine durchgehende Nut ausgebildet sind.

3. Zahnimplantat (100, 200) nach einem der vorstehenden Ansprüche, wobei sich ein Kerndurchmesser des Implantatkörpers (102, 202) in dem ersten Gewindeabschnitt (114) in Richtung des apikalen Endes (106) konisch verjüngt.

4. Zahnimplantat (100, 200) nach einem der vorstehenden Ansprüche, wobei der Schaft (112, 206) einen zweiten Gewindeabschnitt (116) umfasst, der sich in Richtung des koronalen Endes (108) an den ersten Gewindeabschnitt (114) anschließt, wobei der Implantatkörper (102, 202) in dem zweiten Gewindeabschnitt (116) ein Außengewinde aufweist, und wobei die Gewindeschneidnut (126, 212) des ersten Gewindeabschnitts (114) sich in dem zweiten Gewindeabschnitt (116) wendelförmig um den Schaft (112, 206) verlaufend fortsetzt, jedoch in dem zweiten Gewindeabschnitt (116) keine selbstschneidende Gewindeschneidkante (128) aufweist, oder eine selbstschneidende Gewindeschneidkante (128) aufweist.

5. Zahnimplantat (100, 200) nach einem der vorstehenden Ansprüche, wobei der Schaft (112, 206) einen dritten Gewindeabschnitt (118) umfasst, der sich in Richtung des koronalen Endes (108) an den zweiten Gewindeabschnitt (116) anschließt und in dem der Implantatkörper (102, 202) ein Außengewinde aufweist, das in das Außengewinde des zweiten Gewindeabschnitts (116) übergeht, wobei die Gewindeschneidnut (126, 212) des ersten Gewindeabschnitts (114) und des zweiten Gewindeabschnitts (116) sich in dem dritten Gewindeabschnitt (118) fortsetzt und auch in dem dritten Gewindeabschnitt (118) wendelförmig um den Schaft (112, 206) verläuft, jedoch in dem dritten Gewindeabschnitt (118) keine selbstschneidende Gewindeschneidkante (128) aufweist.

6. Zahnimplantat nach Anspruch 5, wobei das Außengewinde des dritten Gewindeabschnitts (118) als mehrgängiges, vorzugsweise zweigängiges Außengewinde ausgebildet ist, das dieselbe Steigung wie das Außengewinde in dem ersten Gewindeabschnitt (114) hat.

7. Zahnimplantat (100, 200) nach einem der vorstehenden Ansprüche, wobei der Schaft (112, 206) einen vierten Abschnitt (120) aufweist, der sich in Richtung des koronalen Endes (108) an den ersten, zweiten oder dritten Gewindeabschnitt (114, 116, 118) anschließt und in dem der Implantatkörper (102, 202) kein Außengewinde und auch keine Gewindeschneidnut (126, 212) aufweist.

8. Zahnimplantat (100, 200) nach einem der vorstehenden Ansprüche, weiterhin umfassend ein Abutment (104, 208), das sich an das koronale Ende (108) des Implantatkörpers (102, 202) anschließt und das mit dem Schaft (112, 206) fest, vorzugsweise stoffschlüssig, verbunden ist.

9. Zahnimplantat (100, 200) nach einem der vorstehenden Ansprüche, weiterhin umfassend eine Aufnahmestruktur (210), die formschlüssig zur Drehmomentübertragung um die Längsachse des Implantatkörpers (102, 202) ausgebildet ist.

10. Zahnimplantat (100, 200) nach Anspruch 9, wobei die Aufnahmestruktur (210) als Teil des Abutments (104, 208) und zum Aufnehmen eines Einbringwerkzeugs (214) ausgebildet ist, vorzugsweise als eine in dem Abutment (104, 208) ausgebildete Nut.

11. Zahnimplantat (100, 200) nach einem der vorstehenden Ansprüche, wobei eine Drehrichtung der Spannut (122) einer Drehrichtung des Außengewindes ersten Gewindeabschnitts (114) entspricht.

12. Zahnimplantat (100, 200) nach einem der vorstehenden Ansprüche, wobei sich die Gewindeschneidnut (126, 212) in dem ersten Gewindeabschnitt (114) und/oder in dem zweiten Gewindeabschnitt (116) in Richtung des koronalen Endes (108) verzweigt.

13. Zahnimplantat (100, 200) nach einem der vorstehenden Ansprüche, wobei der Implantatkörper (102, 202) in dem Bohrerabschnitt (110, 204) als Spiralbohrer ausgebildet ist, der zwei oder mehr Hauptschneiden (124), vorzugsweise drei oder mehr Hauptschneiden (124) aufweist.

14. Zahnimplantat (100, 200) nach einem der vorstehenden Ansprüche, wobei der Implantatkörper (102, 202) an seinem apikalen Ende (106) eine Zentrierspitze aufweist und sich der Bohrerabschnitt (110, 204) an die Zentrierspitze anschließt und sich in Richtung des koronalen Endes (108) erstreckt, wobei die Zentrierspitze so ausgebildet ist, dass das Zahnimplantat (100, 200) mittels der Zentrierspitze relativ zu einem Kieferknochen ausgerichtet werden kann.

15. Zahnimplantat (100, 200) nach einem der vorstehenden Ansprüche, wobei der Implantatkörper (102, 202) einen Hinterschnitt aufweist, der in Richtung des koronalen Endes (108) an die selbstschneidende Gewindeschneidkante (128) der Gewindeschneidnut (126, 212) des ersten Gewindeabschnitts (114) angrenzend angeordnet ist.

## Claims

1. A dental implant (100, 200), comprising an implant body (102, 202) extending in a longitudinal direction of the implant body (102, 202) from its apical end (106) to its coronal end (108), wherein the implant body (102, 202)
- has a drill section (110, 204) arranged at the apical end (106), in which the implant body (102, 202) is formed for drilling a drill hole in a jaw bone, and
- has a shaft (112, 206) which adjoins the drill section (110, 204) in the direction of the coronal end (108) and which comprises
- a first threaded section (114) in which the implant body (102, 202) has an external thread, wherein
the implant body (102, 202) has, in the first threaded section (114), at least one thread-cutting groove (126, 212) which interrupts the external thread and which extends helically around at least one axial section of the shaft (112, 206) and comprises, at least in the first threaded section (114), a self-cutting thread-cutting edge (128) extending between the thread-cutting groove (126, 212) and the external thread.

2. Dental implant (100, 200) according to claim 1, wherein the implant body (102, 202) in the drill section (110, 204) is designed as a twist drill with at least one helically extending chipping groove (122) and at least one main cutting edge (124), wherein the at least one thread-cutting groove (126, 212) and the at least one chipping groove (122) are designed as a continuous groove.

3. Dental implant (100, 200) according to one of the preceding claims, wherein a core diameter of the implant body (102, 202) in the first threaded portion (114) tapers conically in the direction of the apical end (106).

4. Dental implant (100, 200) according to one of the preceding claims, wherein the shaft (112, 206) comprises a second threaded portion (116) which adjoins the first threaded portion (114) in the direction of the coronal end (108), wherein the implant body (102, 202) has an external thread in the second threaded portion (116), and wherein the thread-cutting groove (126, 212) of the first thread section (114) continues in the second threaded section (116) in a helical shape around the shaft (112, 206), but does not have a self-cutting thread-cutting edge (128) in the second thread section (116), or has a self-cutting thread-cutting edge (128).

5. Dental implant (100, 200) according to one of the preceding claims, wherein the shaft (112, 206) comprises a third threaded portion (118) which adjoins the second threaded portion (116) in the direction of the coronal end (108) and in which the implant body (102, 202) has an external thread which merges into the external thread of the second threaded portion (116), wherein the thread-cutting groove (126, 212) of the first thread section (114) and of the second thread section (116) continues in the third threaded section (118) and also extends helically around the shaft (112, 206) in the third threaded section (118), but does not have a self-cutting thread-cutting edge (128) in the third threaded section (118).

6. Dental implant according to claim 5, wherein the external thread of the third threaded section (118) is formed as a multi-start, preferably two-start external thread, which has the same pitch as the external thread in the first threaded portion (114).

7. Dental implant (100, 200) according to one of the preceding claims, wherein the shaft (112, 206) has a fourth section (120) which adjoins the first, second or third threaded section (114, 116, 118) in the direction of the coronal end (108) and in which the implant body (102, 202) has no external thread and also no thread-cutting groove (126, 212).

8. Dental implant (100, 200) according to one of the preceding claims, further comprising an abutment (104, 208) which adjoins the coronal end (108) of the implant body (102, 202) and which is firmly, preferably materially, connected to the shaft (112, 206).

9. Dental implant (100, 200) according to one of the preceding claims, further comprising a receiving structure (210) which is designed to be form-fit for torque transmission about the longitudinal axis of the implant body (102, 202).

10. The dental implant (100, 200) according to claim 9, wherein the receiving structure (210) is formed as part of the abutment (104, 208) and for receiving an insertion tool (214), preferably as a groove formed in the abutment (104, 208).

11. The dental implant (100, 200) according to any one of the preceding claims, wherein a rotational direction of the chipping groove (122) corresponds to a rotational direction of the external thread of the first threaded portion (114).

12. The dental implant (100, 200) according to any one of the preceding claims, wherein the thread-cutting groove (126, 212) in the first threaded portion (114) and/or in the second threaded portion (116) branches towards the coronal end (108).

13. Dental implant (100, 200) according to one of the preceding claims, wherein the implant body (102, 202) in the drill section (110, 204) is formed as a twist drill having two or more main cutting edges (124), preferably three or more main cutting edges (124).

14. Dental implant (100, 200) according to one of the preceding claims, wherein the implant body (102, 202) has a centering tip at its apical end (106) and the drill section (110, 204) adjoins the centering tip and extends towards the coronal end (108), wherein the centering tip is designed such that the dental implant (100, 200) can be aligned relative to a jawbone by means of the centering tip.

15. The dental implant (100, 200) according to any one of the preceding claims, wherein the implant body (102, 202) comprises an undercut arranged adjacent to the self-cutting thread-cutting edge (128) of the thread-cutting groove (126, 212) of the first threaded portion (114) in the direction of the coronal end (108).

## Revendications

1. Implant dentaire (100, 200), avec un corps d'implant (102, 202), qui s'étend dans une direction longitudinale du corps d'implant (102, 202) de son extrémité apicale (106) à son extrémité coronaire (108), dans lequel le corps d'implant (102, 202)
- présente une section de foret (110, 204) agencée à l'extrémité apicale (106), dans laquelle le corps d'implant (102, 202) est réalisé pour le forage d'un trou de forage dans un os maxillaire, et
- présente une tige (112, 206) faisant suite à la section de foret (110, 204) en direction de l'extrémité coronaire (108), qui
- comprend une première section filetée (114), dans laquelle le corps d'implant (102, 202) présente un filet extérieur, dans lequel
le corps d'implant (102, 202) présente dans la première section filetée (114) au moins une rainure de filetage (126, 212) interrompant le filet extérieur, qui s'étend de manière hélicoïdale autour d'au moins une section axiale de la tige (112, 206) et comprend au moins dans la première section filetée (114) une arête de filetage autocoupante (128) s'étendant entre la rainure de filetage (126, 212) et le filet extérieur.

2. Implant dentaire (100, 200) selon la revendication 1, dans lequel le corps d'implant (102, 202) est réalisé dans la section de foret (110, 204) sous forme de foret hélicoïdal avec au moins une rainure de serrage (122) s'étendant de manière hélicoïdale et au moins un tranchant principal (124), dans lequel l'au moins une rainure de filetage (126, 212) et l'au moins une rainure de serrage (122) sont réalisées sous la forme d'une rainure continue.

3. Implant dentaire (100, 200) selon l'une quelconque des revendications précédentes, dans lequel un diamètre central du corps d'implant (102, 202) diminue de façon conique dans la première section filetée (114) en direction de l'extrémité apicale (106).

4. Implant dentaire (100, 200) selon l'une quelconque des revendications précédentes, dans lequel la tige (112, 206) comprend une deuxième section filetée (116), qui fait suite à la première section filetée (114) en direction de l'extrémité coronaire (108), dans lequel le corps d'implant (102, 202) présente dans la deuxième section filetée (116) un filet extérieur, et dans lequel la rainure de filetage (126, 212) de la première section filetée (114) se poursuit dans la deuxième section filetée (116) en s'étendant de manière hélicoïdale autour de la tige (112, 206), cependant ne présente pas d'arête de filetage autocoupante (128) dans la deuxième section filetée (116), ou présente une arête de filetage autocoupante (128).

5. Implant dentaire (100, 200) selon l'une quelconque des revendications précédentes, dans lequel la tige (112, 206) comprend une troisième section filetée (118), qui fait suite à la deuxième section filetée (116) en direction de l'extrémité coronaire (108) et dans laquelle le corps d'implant (102, 202) présente un filet extérieur, qui se transforme en filet extérieur de la deuxième section filetée (116), dans lequel la rainure de filetage (126, 212) de la première section filetée (114) et de la deuxième section filetée (116) se poursuit dans la troisième section filetée (118) et s'étend aussi dans la troisième section filetée (118) de manière hélicoïdale autour de la tige (112, 206), cependant ne présente pas d'arête de filetage autocoupante (128) dans la troisième section filetée (118).

6. Implant dentaire selon la revendication 5, dans lequel le filet extérieur de la troisième section filetée (118) est réalisé sous forme de filet extérieur à plusieurs filets, de préférence à deux filets, qui a le même pas que le filet extérieur dans la première section filetée (114).

7. Implant dentaire (100, 200) selon l'une quelconque des revendications précédentes, dans lequel la tige (112, 206) présente une quatrième section (120), qui fait suite à la première, deuxième ou troisième section filetée (114, 116, 118) en direction de l'extrémité coronaire (108) et dans laquelle le corps d'implant (102, 202) ne présente pas de filet extérieur ni de rainure de filetage (126, 212).

8. Implant dentaire (100, 200) selon l'une quelconque des revendications précédentes, comprenant en outre un pilier (104, 208), qui fait suite à l'extrémité coronaire (108) du corps d'implant (102, 202) et qui est relié solidement, de préférence par complémentarité de matière, à la tige (112, 206).

9. Implant dentaire (100, 200) selon l'une quelconque des revendications précédentes, comprenant en outre une structure de réception (210), qui est réalisée par complémentarité de forme pour la transmission du couple autour de l'axe longitudinal du corps d'implant (102, 202).

10. Implant dentaire (100, 200) selon la revendication 9, dans lequel la structure de réception (210) est réalisée sous forme de partie du pilier (104, 208) et pour la réception d'un outil de mise en place (214), de préférence sous la forme d'une rainure réalisée dans le pilier (104, 208).

11. Implant dentaire (100, 200) selon l'une quelconque des revendications précédentes, dans lequel un sens de rotation de la rainure de serrage (122) correspond à un sens de rotation du filet extérieur de la première section filetée (114).

12. Implant dentaire (100, 200) selon l'une quelconque des revendications précédentes, dans lequel la rainure de filetage (126, 212) se ramifie dans la première section filetée (114) et/ou dans la deuxième section filetée (116) en direction de l'extrémité coronaire (108).

13. Implant dentaire (100, 200) selon l'une quelconque des revendications précédentes, dans lequel le corps d'implant (102, 202) est réalisé dans la section de foret (110, 204) sous forme de foret hélicoïdal, qui présente deux ou plus de tranchants principaux (124), de préférence trois ou plus de tranchants principaux (124).

14. Implant dentaire (100, 200) selon l'une quelconque des revendications précédentes, dans lequel le corps d'implant (102, 202) présente à son extrémité apicale (106) une pointe de centrage et la section de foret (110, 204) fait suite à la pointe de centrage et s'étend en direction de l'extrémité coronaire (108), dans lequel la pointe de centrage est réalisée de telle sorte que l'implant dentaire (100, 200) peut être orienté par rapport à un os maxillaire au moyen de la pointe de centrage.

15. Implant dentaire (100, 200) selon l'une quelconque des revendications précédentes, dans lequel le corps d'implant (102, 202) présente une contre-dépouille, qui est agencée en direction de l'extrémité coronaire (108) de manière adjacente à l'arête de filetage autocoupante (128) de la rainure de filetage (126, 212) de la première section filetée (114).
